(19) **Europäisches Patentamt**
**European Patent Office**
**Office européen des brevets**

(11) **EP 2 942 641 A1**

(12) **EUROPEAN PATENT APPLICATION**
published in accordance with Art. 153(4) EPC

(43) Date of publication:
**11.11.2015 Bulletin 2015/46**

(51) Int Cl.:
**G01S 13/34** (2006.01)

(21) Application number: **13870329.3**

(22) Date of filing: **19.02.2013**

(86) International application number:
**PCT/JP2013/054043**

(87) International publication number:
**WO 2014/106907 (10.07.2014 Gazette 2014/28)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **07.01.2013 JP 2013000694**

(71) Applicant: **TOYOTA JIDOSHA KABUSHIKI KAISHA**
**Toyota-shi, Aichi-ken, 471-8571 (JP)**

(72) Inventors:
• **SATO, Yoh**
**Toyota-shi**
**Aichi 471-8571 (JP)**
• **OGAWA, Masaru**
**Nagakute-shi**
**Aichi 480-1192 (JP)**

(74) Representative: **Winter, Brandl, Fürniss, Hübner, Röss, Kaiser, Polte - Partnerschaft mbB**
**Patent- und Rechtsanwaltskanzlei**
**Alois-Steinecker-Strasse 22**
**85354 Freising (DE)**

(54) **RADAR DEVICE**

(57) A radar apparatus is provided by which it is possible to detect a target at high resolution with a relatively small calculation amount without increasing the band width of a transmission signal. A FFT transform means carrying out a Fourier transform on a received signal received by a reception means into frequency spectrum data; a peak frequency detection means detecting a peak frequency of the frequency spectrum data acquired through the Fourier transform; a data extraction means extracting data near the peak frequency from the frequency spectrum data acquired through the Fourier transform, an inverse FFT transform means carrying out an inverse Fourier transform on the extracted data near the peak frequency into time base data; and a target detection means detecting the target by carrying out a high resolution process on the time base data acquired through the inverse Fourier transform are included.

FIG.2

```
START
   │
SAMPLING                              ─ 100
   │
FFT PROCESS                           ─ 110
   │
COARSE PEAK DETECTION                 ─ 120
   │
PEAK EXTRACTION AND PARTIAL
WAVEFORM GENERATION                   ─ 130
   │
IFFT PROCESS                          ─ 140
   │
HIGH RESOLUTION PROCESS               ─ 150
   │
FINE PEAK DETECTION                   ─ 160
   │
END
```

Printed by Jouve, 75001 PARIS (FR)

**Description**

TECHNICAL FIELD

The present invention relates to a radar apparatus, and, in particular, to a radar apparatus that has a transmission means transmitting a transmission signal and a reception means receiving reflected waves of the transmission signal as a received signal, and is suitable when detecting a target by processing the received signal received by the reception means.

BACKGROUND ART

In the prior art, a radar apparatus is known which detects a target by processing a received signal acquired through receiving reflected waves from the target (for example, see Patent Reference No. 1). The radar apparatus successively changes the frequency of a transmission signal by repeating a section of increasing the frequency and a section of decreasing the frequency, receives reflected waves reflected by a target as a received signal, processes the received signal, and detects the distance to the target.
When a frequency analysis is carried out using a common Fourier transform when detecting a target in a FM-CW radar apparatus, it may be impossible to distinguishingly detect a target from among targets near one another, because the resolution is low. Generally speaking, the distance resolution of a radar apparatus depends on the band width of the transmission signal. Therefore, in order to detect the distance to a target at high resolution, it is advantageous to increase the band width of the transmission signal of the radar apparatus. However, in order to increase the band in a radar apparatus, expensive devices, circuits and/or antennas, are needed, and thus, the manufacturing cost increases. Also, because transmission power is considerably limited by the Radio Law, in particular for a radar having a band width of a very wide band (UWB) greater than or equal to 500 MHz, the distance of being able to seek a target is reduced.
As a method of improving the distance resolution without increasing the band width in a radar apparatus, there is an FDI (Frequency Domain Interferometry) method where a plurality of transmission signals having frequencies slightly different are transmitted, a target is detected based on the phase differences among the plurality of the received signals, and thus, higher resolution is acquired in comparison to one that is based on the band width of a radar apparatus.

PRIOR ART REFERENCE

PATENT REFERENCE

Patent Reference No. 1: Japanese Laid-Open Patent Application No. 2001-91639

SUMMARY OF THE INVENTION

PROBLEM TO BE SOLVED BY THE INVENTION

As a method of synthesizing the phase differences among a plurality of the received signals as mentioned above, the CAPON method, the MUSIC method, the ESPRIT method and so forth are known that are typical as high resolution processes for a direction. However, although a technique of improving the resolution by applying the FDI method using an operation method such as the CAPON method or so in a FM-CW radar is known in Patent Reference No. 1 or so, the calculation amount is huge in comparison to one using a Fourier transform, thus a real-time process is difficult. As a result, it is not possible to apply the operation method to, for example, an on-board radar apparatus, for which the processing time and/or the operation speed is limited.
The present invention has been devised in consideration of the above-described point, and an object thereof is to provide a radar apparatus by which it is possible to detect a target at high resolution with a relatively small calculation amount without increasing the band width of the transmission signal.

MEANS FOR SOLVING THE PROBLEM

The above-mentioned object is achieved by a radar apparatus having a transmission means that transmits a transmission signal and a reception means that receives reflected waves of the transmission signal as a received signal, to process the received signal received by the reception means and detect a target, and having a FFT transform means that carries out a Fourier transform on the received signal received by the reception means into frequency spectrum data; a peak frequency detection means that detects a peak frequency of the frequency spectrum data acquired as an operation result of the FFT transform means; a data extraction means that extracts data near the peak frequency detected by the peak frequency detection part from the frequency spectrum data acquired as the operation result of the FFT transform means; an inverse FFT transform means that carries out an inverse Fourier transform on the data near the peak frequency acquired as an operation result of the data extraction means into time base data; a target detection means that detects the target as a result of carrying out a high resolution process on the time base data acquired as an operation result of the inverse FFT transform means.

Also, the above-mentioned object is achieved by a radar apparatus having a transmission means that transmits a transmission signal and a reception means that receives reflected waves of the transmission signal as a received signal, to process the received signal received by the reception means and detect a target, and having a preprocess means that carries out a window function operation on the received signal received by the reception means; a first FFT transform means that carries out a Fourier transform on data acquired as an operation result of the preprocess means into frequency spectrum data; a postprocess means that carries out a postprocess on the frequency spectrum data acquired as an operation result of the first FFT transform means; a peak frequency detection means that detects a peak frequency of the frequency spectrum data acquired as an operation result of the postprocess means; a second FFT transform means that carries out a Fourier transform on the received signal received by the reception means into frequency spectrum data; a data extraction means that extracts data near the peak frequency detected by the peak frequency detection part from the frequency spectrum data acquired as an operation result of the second FFT transform means; an inverse FFT transform means that carries out an inverse Fourier transform on the data near the peak frequency acquired as an operation result of the data extraction means into time base data; and a target detection means that detects the target as a result of carrying out a high resolution process on the time base data acquired as an operation result of the inverse FFT transform means.

## ADVANTAGEOUS EFFECT OF THE INVENTION

According to the present invention, it is possible to carry out target detection at high resolution with a relatively small calculation amount without increasing the band width of the transmission signal.

## BRIEF DESCRIPTION OF DRAWINGS

FIG. 1 is a configuration diagram of a radar apparatus that is a first embodiment of the present invention.
FIG. 2 is a flowchart of one example of a control routine executed by a control circuit in the radar apparatus according to the present embodiment.
FIG. 3 illustrates one example of waveforms generated during a process of detecting a target by the control circuit in the radar apparatus according to the present embodiment.
FIG. 4 schematically illustrates a method of detecting a target by the control circuit in the radar apparatus according to the present embodiment.
FIG. 5 illustrates relations between sampling that the control circuit carries out on a received signal and array outputs in the radar apparatus according to the present embodiment.
FIG. 6 is a flowchart illustrating processes commonly carried out before and after a FFT process.
FIG. 7 illustrates simulation results including a distance detection result only by a FFT process; a distance detection result by a process according to the first embodiment of the present invention; and a distance detection result by a process according to a second embodiment of the present invention, for a case where two targets are present close to one another.
FIG. 8 is a flowchart of one example of a control routine executed by a control circuit in the radar apparatus according to the present embodiment.

## MODES FOR CARRYING OUT THE INVENTION

Below, using the drawings, specific embodiments of a radar apparatus according to the present invention will be described.

Embodiment 1

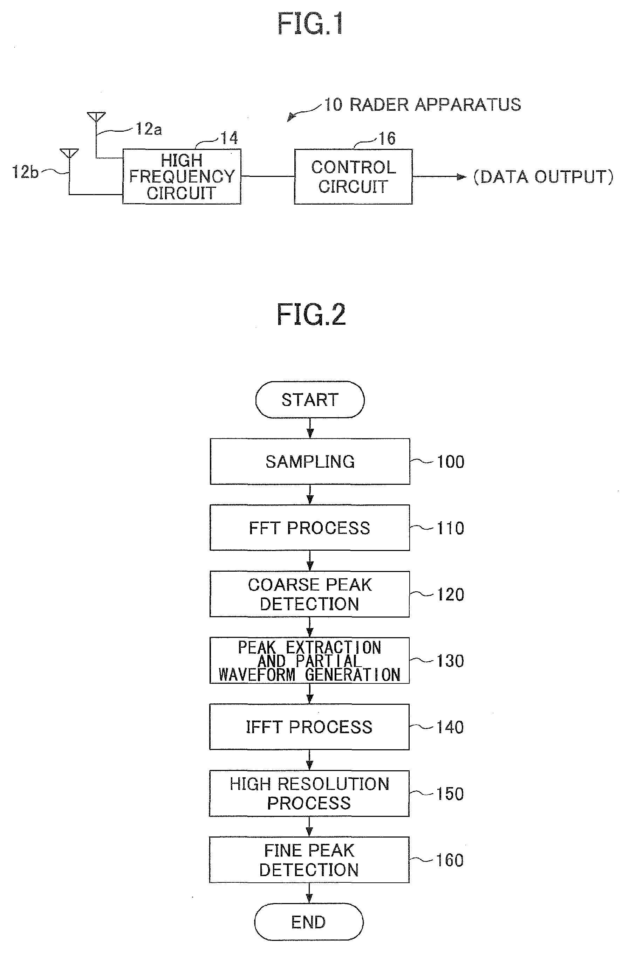

FIG. 1 is a configuration diagram of a radar apparatus that is a first embodiment of the present invention. The radar apparatus 10 is mounted in a movable body, for example, a vehicle, a flying body or so, and is a perimeter monitoring apparatus for detecting a target present around its own movable body. The radar apparatus 10 can be applied to, for example, a radar apparatus of an FM-CW type which, as a result of transmitting frequency modulated transmission waves and receiving reflected waves reflected by a target, detects the target within a predetermined range.

The radar apparatus 10 shown in FIG. 1 has antennas 12, a high frequency circuit 14 and a control circuit 16. Note that, the radar apparatus 10 according to the present embodiment is mounted in a vehicle and detects a target around its own vehicle in a FM-CW method. Data of the target thus detected in the radar apparatus 10 is provided or output to and is used by an application apparatus(es) mounted in the vehicle, such as, for example, an inter-vehicle distance control apparatus, a speed control apparatus, a braking apparatus and/or the like.

The antennas 12 are installed in a vehicle front and/or vehicle rear bumper(s) or so. The antennas 12 include a transmission antenna 12a radiating a transmission signal to be transmitted to the exterior space and a reception antenna 12b receiving reflected waves generated as a result of the transmission signal transmitted by the transmission antenna 12a being reflected by a target. The transmission antenna 12a transmits the transmission signal in a predetermined area around the vehicle (for example, in the vehicle travel direction). The reception antenna 12b is capable of receiving the reflected waves reflected from the predetermined area as a received signal.

The high frequency circuit 14 includes an oscillator and a mixer. The oscillator outputs an oscillation signal having a temporally changed frequency. The transmission antenna 12a of the antennas 12 is connected to the oscillator of the high frequency circuit 14. The transmission antenna 12a responds to the oscillation signal supplied by the oscillator and transmits the transmission signal (for example, millimeter waves) that is electromagnetic waves having the temporally changed frequency.

In the high frequency circuit 14, to the mixer, the oscillator and the reception antenna 12b are connected. The reflected waves received by the reception antenna 12b are supplied to the mixer as the received signal. The mixer mixes the oscillation signal that is output by the oscillator and the received signal supplied by the reception antenna 12b, and generates a beat signal having a beat frequency that is the frequency difference between the two signals.

The control circuit 16 has an A/D converter to be connected to the mixer of the high frequency circuit 14. The beat signal generated by the mixer is input to the A/D converter of the control circuit 16. The A/D converter converts the beat signal that is an analog signal supplied by the mixer of the high frequency circuit 14 into a digital signal. The A/D conversion by the A/D converter is carried out at predetermined sampling periods.

The control circuit 16 detects a target present within the predetermined area from its own vehicle by carrying out signal processing as described later. Specifically, the control circuit 16 carries out a Fourier transform (FFT) process and/or the like on the digital signal acquired through the A/D conversion, thus generates frequency spectrum data, and extracts a frequency component (an amplitude and a phase) corresponding to the position of the target from the frequency spectrum data. Based on the thus extracted frequency component, the control circuit 16 detects the distance from its own vehicle to the target, the relative speed between its own vehicle and the target, and the direction (angle) of the target from its own vehicle. Then, the control circuit 16 recognizes the thus detected target as a control target, and outputs a control signal that is in accordance with the recognition result to the application apparatus(es).

Next, with reference FIGs. 2-5, a method of detecting a target in the radar apparatus 10 according to the present embodiment will be described.

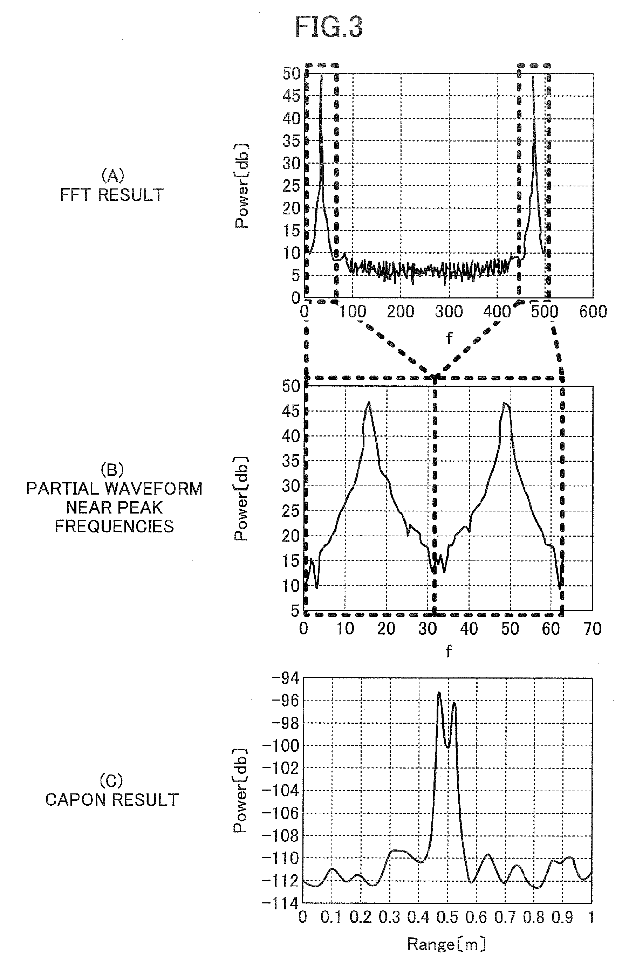

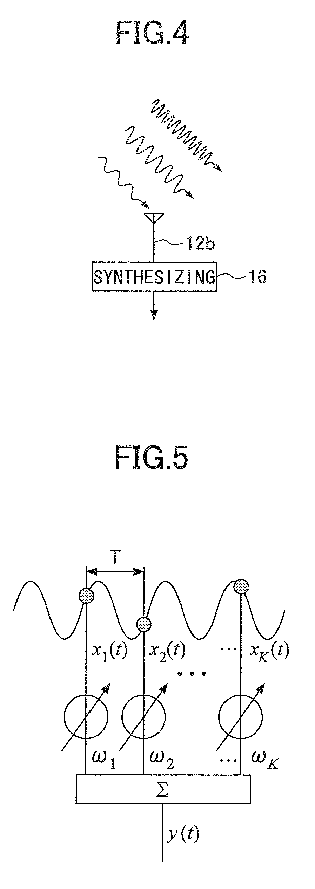

FIG. 2 is a flowchart of one example of a control routine executed by the control circuit 16 in the radar apparatus 10 according to the present embodiment. FIG. 3 illustrates one example of waveforms generated during a process of detecting a target by the control circuit 16 in the radar apparatus 10 according to the present embodiment. FIG. 4 schematically illustrates a method of detecting a target by the control circuit 16 in the radar apparatus 10 according to the present embodiment. FIG. 5 illustrates relations between sampling that the control circuit 16 carries out on the received signal and array outputs in the radar apparatus 10 according to the present embodiment.

According to the present embodiment, when the radar apparatus 10 is started as a result of the application apparatus(es) or so being started, the oscillation signal is output from the oscillator of the high frequency circuit 14, thereby the transmission signal is radiated to the exterior space from the transmission antenna 12a of the antennas 12 of the vehicle, and also, a reception process is carried out at the reception antenna 12b, during running of the radar apparatus 10. The transmission signal transmitted from the transmission antenna 12a is a signal having the transmission frequency temporally changed.

When no target is present within the irradiation area of the transmission signal, the transmission signal transmitted by the transmission antenna 12a is not reflected by a target; therefore the reflected waves of the transmission signal reflected by the target itself are not present, and in this case, the strength of the received waves received by the reception antenna 12b is relatively weak. On the other hand, when a target is present within the irradiation area of the transmission signal, the transmission signal transmitted from the transmission antenna 12a is reflected by the target, and the reflected waves of the transmission signal reflected by the target are received by the reception antenna 12b. In this case, the strength of the received waves received by the reception antenna 12b is relatively strong.

When the reflected waves of the transmission signal are received by the reception antenna 12b, the received signal is supplied to the mixer of the high frequency circuit 14, and thus, is mixed with the oscillation signal having the temporally changed frequency from the oscillator. The mixer mixes the received signal from the reception antenna 12b and the oscillation signal from the oscillator, and generates the beat signal. The frequency of the beat signal represents the distance to the target from its own vehicle, and the level of the beat signal represents the strength of the received reflected waves. The beat signal generated by the mixer is output to the control circuit 16.

The control circuit 16 inputs the beat signal that is an analog signal from the high frequency circuit 14 to the A/D converter, and carries out digital conversion by sampling the data at the predetermined sampling periods (Step 100). The control circuit 16 carries out a Fourier transform (FFT) process on the digital data acquired through sampling at the predetermined sampling periods to convert the time base data into frequency spectrum data (Step 110). In the FFT process, the calculation amount when acquiring the frequency spectrum data from N points (for example, 1024 points) of the sampling data is $O(N \cdot \log_{10} N)$.

Next, the control circuit 16 carries out a search of changing the frequency on the frequency spectrum data thus acquired through the FFT process and detects frequencies (peak frequencies) at which the signal strength has peaks in the frequency spectrum data (Step 120). The peak frequencies of the frequency spectrum data acquired through the FFT process are such that, in comparison to ones acquired through the FDI method using the CAPON method which will be described later, the frequency peak width is wider and the accuracy is lower.

Note that, detection of the peak frequencies in Step 120 can be such as to extract frequencies at which peaks of the signal strength are greater than or equal to a threshold. In this case, the threshold can be the minimum signal strength required for detecting a target to be detected by its own vehicle. Further, when a plurality of the targets are present within the irradiation area of the transmission signal, a plurality of the peak frequencies are acquired. Further, in the frequency spectrum data acquired through the FFT process, the same waveforms occur that are bilaterally line-symmetric about 1/2 the sampling frequency, according to the Nyquist theorem. Therefore, as shown in FIG. 3 (A), for a single target, the peak frequencies occur at two positions bilaterally about 1/2 the sampling frequency.

After thus detecting the peak frequencies of the frequency spectrum data acquired through the FFT process, the control circuit 16 then extracts data near the peak frequencies (including the two peak frequencies occurring bilaterally about 1/2 the sampling frequency) from the frequency spectrum data, and creates frequency spectrum data only near the peak frequencies (Step 130).

Note that the extracting data near the peak frequencies from the frequency spectrum data can be carried out on a predetermined frequency range around the peak frequencies (the areas surrounded by the broken lines in FIG. 3 (A)). Further, the partial frequency spectrum data thus extracted is, as shown in FIG. 3 (B), the waveform bilaterally line-symmetric about 1/2 the sampling frequency, similar to the original frequency spectrum data (shown in FIG. 3 (A)). However, in a case where quadrature detection is carried out by the mixer, the peak frequency appears only on one side. In this case, only the one position is extracted accordingly.

The control circuit 16 carries out an inverse Fourier transform (IFFT) process on the above-mentioned frequency spectrum data only near the peak frequencies to return the frequency spectrum data to the time base data (Step 140). This time base data is time sampling data reduced in its data amount from the time base data of the sampling data first acquired at the sampling periods. Note that, in the IFFT process, the calculation amount when acquiring the time base data from the data of N points (for example, total 32 points, 16 points, or so, occurring bilaterally about 1/2 the sampling frequency) of the frequency spectrum data is $O(N \cdot \log_{10} N)$.

Next, the control circuit 16 carries out a high resolution process on the time base data acquired through the IFFT process and converts the time base data into frequency spectrum data (Step 150). The high resolution process uses, as shown in FIG. 4, the CAPON method that is one of the FDI (Frequency Domain Interferometry) methods where a plurality of transmission signals having slightly different frequencies are transmitted from the transmission antenna 12a, a plurality of reflected waves having slightly different frequencies are received by the reception antenna 12b, and the target is detected based on the phase differences between the received signals.

Specifically, the control circuit 16 expresses the frequency spectrum data by the following formula (4), where, as shown in FIG. 5, X(t) denotes array-like data acquired through sampling at K positions, respectively, where the times are different; W(t) denotes weights therefor; T denotes the sampling periods; the array output y(t) is expressed by the following formula (1); an autocorrelation matrix $R_{XX}$ is expressed by the following formula (2); and a mode vector a(f) is expressed by the following formula (3), as the high resolution process for improving the distance resolution for when detecting the distance to a target from its own vehicle without increasing the band width of the transmission signal. In the high resolution process (the FDI method using the CAPON method), the calculation amount when acquiring the frequency spectrum data from N points of sampling data is, $O(N^3)$.

$$y(t) = W^H X(t) \qquad \cdots (1)$$

where

$\boldsymbol{X}(t) = [x_1(t), x_2(t) \cdots, x_K(t)]^T$

$W(t) = [\omega_1(t), \omega_2(t) \cdots, \omega_K(t)]^T$

$$R_{XX} = E\left[X(t)X^H(t)\right]^T \qquad \cdots (2)$$

$$a(f) = \left[exp\left(-j2\pi f t_1\right), \cdots, exp\left(-j2\pi f t_K\right)\right]^T \qquad \cdots (3)$$

where $t_n = (n - 1)^T$

$$P_{CP}(f) = \frac{1}{a^H(f)R_{XX}^{-1}a(f)} \qquad \cdots (4)$$

After thus acquiring the frequency spectrum data through the high resolution process, the control circuit 16 then carries out a search of changing the frequency on the frequency spectrum data to detect peak frequencies at which the signal strength has peaks in the frequency spectrum data (Step 160). The peak frequencies of the frequency spectrum data acquired through the high resolution process are such that, in comparison to those acquired through the FFT process described above, the frequency peak width is narrower and the accuracy is higher.

Note that, detection of the peak frequencies in Step 160 can be such as to extract the frequencies at which peaks of the signal strength are greater than or equal to a threshold. In this case, the threshold can be the minimum signal strength required for detecting a target to be detected by its own vehicle. Further, when a plurality of the targets are present within the irradiation area of the transmission signal, a plurality of the peak frequencies are acquired. Further, in the frequency spectrum data acquired through the high resolution process, the same waveforms occur that are bilaterally line-symmetric about 1/2 the sampling frequency, according to the Nyquist theorem. Therefore, for a single target, the peak frequencies occur at two positions bilaterally about 1/2 the sampling frequency.

After thus detecting the peak frequencies of the frequency spectrum data acquired through the high resolution process, the control circuit 16 estimates that the target is present at the distance from its own vehicle corresponding to the peak frequencies, and detects the distance of the target from its own vehicle. Note that, at this time, when there are a plurality of the peak frequencies such that a plurality of the targets are present, the control circuit 16 carries out the distance detection for each of the targets. Then, the control circuit 16 generates a control signal corresponding to the detected distance, and carries out a control output to the application apparatus(es).

Thus, in the radar apparatus 10 according to the present embodiment, it is possible to carry out the signal processing to detect the distance to the target from its own vehicle based on the reception result of the reflected waves of the transmission signal reflected from the target, in a hybrid manner of combining the FFT process and the high resolution process that is the FDI method using the CAPON method.

Specifically, first, the full frequency range of the frequency spectrum data acquired through the FFT process carried out on the sampling data (for example, 1024 points) of the beat signal is searched to detect the relatively coarse peak frequencies. Thereafter, the IFFT process is carried out on the frequency spectrum data near the peak frequencies (for example, total 32 points or 16 points occurring bilaterally about 1/2 the sampling frequency), and thus, the frequency spectrum data is returned to the time base data. The high resolution process is then carried out on the thus acquired time base data to acquire the frequency spectrum data. The thus acquired frequency spectrum data is then searched to detect the relatively fine peak frequencies.

In this configuration, the peak frequencies of the frequency spectrum data that is acquired through the high resolution process that is the FDI method using the CAPON method are detected. Therefore, in comparison to a configuration of detecting peak frequencies of frequency spectrum data that is acquired only through a FFT process, it is possible to carry out the detection at high resolution, and it is possible to improve the detection accuracy of peak frequencies. Therefore, according to the present embodiment, it is possible to carry out the distance detection to the target at high resolution without increasing the band width of the transmission signal.

Further, in this configuration, the detection of peak frequencies is carried out not only by the high resolution process that is the FDI method using the CAPON method, but by both this high resolution process and the FFT process. Specifically, the full frequency range of the frequency spectrum data acquired through the FFT process is searched to detect the peak frequencies, the thus acquired frequency spectrum data near the peak frequencies is returned to the time base data, and the thus acquired time base data is converted into the frequency spectrum data through the high resolution process. Thereafter, the thus acquired frequency spectrum data is searched to detect the peak frequencies.

Therefore, according to the present embodiment, it is possible to remarkably reduce the calculation amount in comparison to a configuration of detecting peak frequencies only by the high resolution process that is the FDI method using the CAPON method, and it is possible to carry out the distance detection to the target with the relatively small calculation amount.

For example, the calculation amount $O(N \cdot \log_{10} N)$ when acquiring frequency spectrum data through a FFT process from 1024 points of sampling data in a radar apparatus of a FM-CW type is "3082". On the other hand, the calculation amount $O(N^3)$ when acquiring frequency spectrum data through the FDI process using the CAPON method from 1024 points of sampling data is "$1.07 \times 10^9$" which is huge in comparison to the above-mentioned one acquired through a FFT process, i.e., 340,000 times or more.

In contrast thereto, the total calculation amount $O((1024 \cdot \log_{10} 1024) + (32 \cdot \log_{10} 32) + (32^3))$ is "35893" for a case where frequency spectrum data is generated by, as in the radar apparatus 10 according to the present embodiment, after a FFT process carried out on 1024 points of sampling data, carrying out an IFFT process on total 32 points of data occurring bilaterally about 1/2 the sampling frequency and the high resolution process (the FDI method using the CAPON method). Thus, it is possible to reduce the calculation amount to about 12 times the above-mentioned one acquired only through a FFT process. Also, it is possible to remarkably reduce the calculation amount in comparison to the above-mentioned one acquired only through the high resolution process.

Thus, in the radar apparatus 10 according to the present embodiment, it is possible to carry out distance detection to a target from its own vehicle at high resolution with a relatively small calculation amount without increasing the band width of the transmission signal. Therefore, in the radar apparatus 10 according to the present embodiment, it is possible to carry out distance detection to a target from its own vehicle in a real-time manner with high accuracy. Thus, it is possible to control the application apparatus(es) using a target detection result with high responsiveness and high accuracy.

Note that, in the first embodiment, the transmission antenna 12a of the antennas 12 corresponds to a "transmission means" recited in the claims, and the reception antenna 12b of the antennas 12 corresponds to a "reception means" recited in the claims. Further, as a result of the control circuit 16 executing Step 110 in the routine shown in FIG. 2, a "FFT transform means" recited in the claims is implemented; as a result of the control circuit 16 executing Step 120, a "peak frequency detection means" recited in the claims is implemented; as a result of the control circuit 16 executing Step 130, a "data extraction means" is implemented; as a result of the control circuit 16 executing Step 140, an "inverse FFT transform means" is implemented; as a result of the control circuit 16 executing Steps 150 and 160, a "target detection means" recited in the claims is implemented.

Further, in the first embodiment, as a result of the control circuit 16 executing Step 150, a "high resolution data conversion means" recited in the claims is implemented; as a result of the control circuit 16 executing Step 160 a "high resolution peak frequency detection means" is implemented; and as a result of the control circuit 16 detecting the distance to a target based on the peak frequencies acquired through executing Step 160, a "distance detection means" recited in the claims is implemented.

Embodiment 2

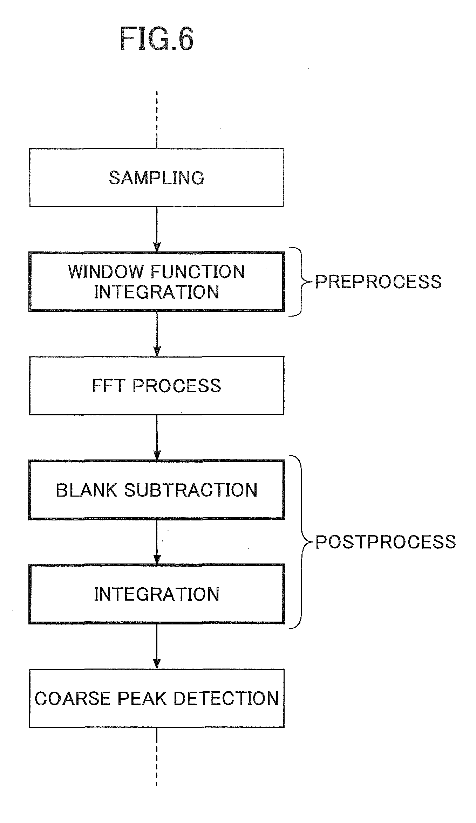

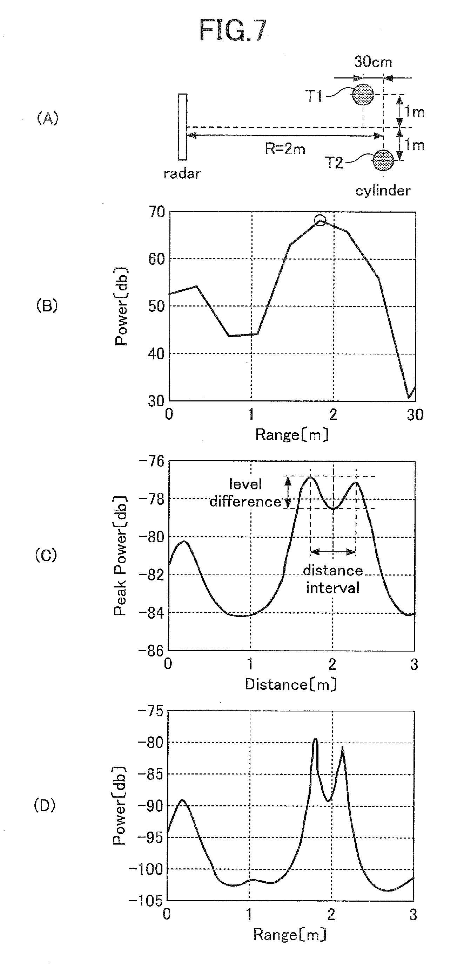

FIG. 6 is a flowchart illustrating processes commonly carried out before and after a FFT process. Note that, in FIG. 6, the same reference numerals are given to Steps for executing the same processes same as Steps shown in FIG. 2, and the descriptions will be omitted. Further, FIG. 7 illustrates simulation results including a distance detection result only by a FFT process; a distance detection result by a process according to the first embodiment; and a distance detection result by a process according to a second embodiment, for when two targets are present close to one another. Note that, FIG. 7 (A) illustrates a specific positional relationship between a radar apparatus and the two targets; FIG. 7 (B) illustrates the distance detection result acquired only through a FFT process in the positional relationship shown in FIG. 7 (A); FIG. 7 (C) illustrates the distance detection result according to the process of the first embodiment in the positional relationship shown in FIG. 7 (A); and FIG. 7 (D) illustrates the distance detection result according to the process of the second embodiment in the positional relationship shown in FIG. 7 (A).

Generally speaking, in order to sensitively detect peak frequencies of frequency spectrum data acquired through a FFT process, a window function operation is carried out after data sampling as a preprocess of the FFT process, and also, a blank subtraction process and an integration process are carried out as a postprocess of the FFT process, as shown in FIG. 6. Note that, the window function is a weighting function of making data outside a predetermined limited section be zero. For example, the window function is a Hanning window, a Hamming window, a Blackman window, or so. The integration process is a process for improving the S/N ratio by instantaneously integrating successively sampled data on the frequency axis. Further, the blank subtraction process is a process of subtracting data (blank data) previously sampled under the condition having no reflected waves from the received signal, to eliminate a noise unique to a circuit such as a coupling noise.

When the preprocess and the postprocess are carried out, because data is modified before and after the FFT process, a likelihood that time base data is not returned to the desired waveform is high as a result of the thus modified data being converted into the time base data through an inverse Fourier transform (IFFT) process. In such a situation, even when the high resolution process is carried out after the IFFT process to convert the time based data into the frequency spectrum data, it may be impossible to detect the peak frequencies of the frequency spectrum data thus acquired through the high resolution process with high accuracy; and as a result, it may be impossible to detect the distance to the target with high accuracy.

For example, as shown in FIG. 7 (A), when two targets (like cylinders) T1 and T2 are placed at positions back and forth apart by 30 cm, about 2 meters from the antennas 12 of the radar apparatus, it is not possible to distinguishingly detect the two targets T1 and T2 only by a FFT process (see FIG. 7 (B)). Further, in a case where the above-mentioned preprocess and postprocess are added before and after the FFT process in the first embodiment, the level difference between the peaks representing the two targets T1 and T2 is relatively small (about 1 db), therefore it is difficult to separate the peaks. Also, the frequency interval between the peaks (the distance interval) is not coincident with the actual interval (30 cm) (about 50 cm; see FIG. 7 (C)).

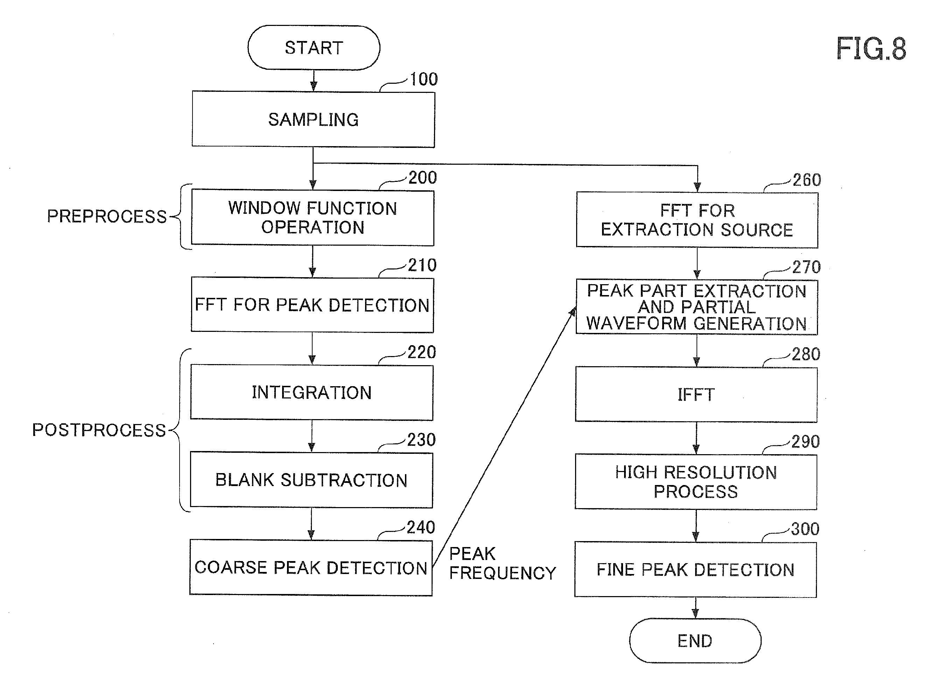

Therefore, in the second embodiment of the present invention, signal processing in the control circuit 16 solves the above-mentioned disadvantages and further improves the target detection. Below, with reference to FIG. 8, a method of detecting a target in the radar apparatus 10 according to the present embodiment will be described.

That is, the radar apparatus 10 according to the present embodiment is implemented as a result of the control circuit 16 executing a control routine of FIG. 8 instead of FIG. 2. FIG. 8 is a flowchart of one example of the control routine executed by the control circuit 16 in the radar apparatus 10 according to the present embodiment. Note that, in FIG. 8, the same reference numerals are given to Steps for executing the same processes same as Steps shown in FIG. 2, and the descriptions will be omitted.

According to the present embodiment, the control circuit 16 inputs the beat signal between the transmission signal and the received signal from the high frequency circuit 14 into the A/D converter and carries out data sampling at predetermined sampling periods (Step 100). Then, the control circuit 16 first carries out a preprocess on the sampling data (Step 200). The preprocess is a window function operation. Thereafter, the control circuit 16 carries out a Fourier transform (FFT) process on the digital data acquired through the window function operation to convert the time base data into the frequency spectrum data (Step 210).

Next, the control circuit 16 carries out a postprocess on the frequency spectrum data acquired through the FFT process in Step 210 (Steps 220 and 230). The postprocess is a modification process to be carried out to sharpen peaks on the frequency spectrum data acquired through the FFT process. Specifically, the postprocess is the above-mentioned integration process and the above-mentioned blank subtraction process.

Then, in the same way as Step 120 mentioned above, the control circuit 16 carries out a search of changing the frequency on the frequency spectrum data acquired through the postprocess to detect peak frequencies at which the signal strength has peaks in the frequency spectrum data (Step 240). The peak frequencies of the frequency spectrum data acquired through the postprocess are those such that, in comparison to ones acquired through the FDI method using the CAPON method described later, the frequency peak width is wider and the accuracy is lower.

As mentioned above, the control circuit 16 inputs the beat signal between the transmission signal and the received signal from the high frequency circuit 14 into the A/D converter, and carries out data sampling at predetermined sampling periods (Step 100). Thereafter, in addition to Steps 200-240, the control circuit 16 carries out a Fourier transform (FFT) process on the sampled digital data to convert the time base data into the frequency spectrum data (Step 260) without carrying out the above-mentioned preprocess and postprocess on the sampled digital data.

The control circuit 16 thus detects the peak frequencies in Step 240 and acquires the frequency spectrum data through the FFT process in Step 260. Then, the control circuit 16 extracts data near the peak frequencies thus detected in Step 240 from the frequency spectrum data thus acquired through the FFT process in Step 260 (including the two peak frequencies occurring bilaterally about 1/2 the sampling frequency), and creates frequency spectrum data only near the peak frequencies (Step 270).

Note that the extracting near the peak frequencies from the frequency spectrum data can be carried out on a predetermined frequency range around the peak frequencies. Further, the thus extracted partial frequency spectrum data has a waveform bilaterally line-symmetric about 1/2 the sampling frequency, the same as the original frequency spectrum data. However, in a case where quadrature detection is carried out by the mixer, the peak frequency is present only on one side. In this case, only one position is extracted accordingly.

Next, the control circuit 16 carries out an inverse Fourier transform (IFFT) process on the frequency spectrum data only near the peak frequencies generated in Step 270 to return the frequency spectrum data to the time base data (Step 280). This time base data is time sampling data reduced in its data amount from the time base data of the sampling data first acquired at the sampling periods.

Then, the control circuit 16 carries out a high resolution process on the time base data acquired through the IFFT process to convert the time base data into the frequency spectrum data (Step 290). The control circuit 16 then carries out a search of changing the frequency on the thus acquired frequency spectrum data to detect the peak frequencies at which the signal strength has peaks in the frequency spectrum data (Step 300). Note that, the high resolution process uses the CAPON method that is one of the FDI methods. Further, the peak frequencies of the frequency spectrum data acquired through the high resolution process are such that, in comparison to those acquired through the FFT process described above, the frequency peak width is narrower and the accuracy is higher.

After thus detecting the peak frequencies of the frequency spectrum data acquired through the high resolution process, the control circuit 16 estimates that the target is present at the distance from its own vehicle corresponding to the peak frequencies, and detects the distance from its own vehicle. Note that, at this time, when there are a plurality of the peak frequencies such that a plurality of the targets are present, the control circuit 16 carries out the distance detection for each of the targets. Then, the control circuit 16 generates a control signal corresponding to the detected distance, and carries out a control output to the application apparatus(es).

Thus, also in the radar apparatus 10 according to the present embodiment, it is possible to carry out signal processing for detecting the distance to the target from its own vehicle based on the reception result of the reflected waves of the transmission signal reflected from the target, in a hybrid manner of combining the FFT process and the high resolution process that is the FDI method using the CAPON method.

Specifically, the full frequency range of the frequency spectrum data acquired through the FFT process accompanied by the above-mentioned preprocess and postprocess carried out on the sampling data (for example, 1024 points) of the beat signal is searched to detect the relatively coarse peak frequencies. Also, in parallel to this peak frequency detection, the frequency spectrum data is acquired through the FFT process not accompanied by the above-mentioned preprocess and post process carried out on the sampling data (for example, 1024 points) of the beat signal. The frequency spectrum data near the above-mentioned peak frequencies (for example, total 32 points or 16 points occurring bilaterally about 1/2 the sampling frequency) is extracted from the thus acquired frequency spectrum data. The thus extracted data is returned to the time base data through the IFFT process. Thereafter, the high resolution process is carried out on the thus acquired time base data. Then, the thus acquired frequency spectrum data is searched to detect the relatively fine peak frequencies.

In this configuration, the peak frequencies of the frequency spectrum data acquired through the high resolution process that is the FDI method using the CAPON method is detected. Therefore, in comparison to a configuration of detecting peak frequencies of frequency spectrum data acquired through only a FFT process, it is possible to carry out detection at high resolution, and it is possible to improve the detection accuracy of peak frequencies. Further, the detection of peak frequencies is carried out not only by the high resolution process that is the FDI method using the CAPON method, but by both this high resolution process and the FFT process.

Therefore, also in the radar apparatus 10 according to the present embodiment, it is possible to carry out distance detection to a target from its own vehicle at high resolution with a relatively small calculation amount without increasing the band width of the transmission signal. Therefore, in the radar apparatus 10 according to the present embodiment, it is possible to carry out distance detection to a target from its own vehicle in a real-time manner with high accuracy. Thus, it is possible to control the application apparatus(es) using a target detection result with high responsiveness and high accuracy.

Further, in the configuration of the present embodiment, the preprocess and the postprocess are carried out before and after the FFT process on the frequency spectrum data from which peak frequencies are detected. Therefore, the sensitivity degradation in the peak frequencies considerably affecting the target detection is reduced. On the other hand, the preprocess and the postprocess are not carried out before and after the FFT process on the frequency spectrum data from which the data near the peak frequencies are extracted and thereafter which is converted into the time base data through the IFFT process. Thus, the data modified through the preprocess and the postprocess before and after the FFT process is not extracted as the frequency spectrum data to be converted into the time base data through the IFFT process, and is not converted into the time base data through the IFFT process. Therefore, it is possible to return the time base data acquired through the IFFT process into the desired waveform.

For example, as shown in FIG. 7 (A), when two targets (like cylinders) T1 and T2 are placed at positions back and forth apart by 30 cm, about 2 meters from the antennas 12 of the radar apparatus, in the radar apparatus 10 according to the present embodiment, the level difference between the peaks representing the two targets T1 and T2 is relatively large, therefore it is easy to separate the peaks, and also, the frequency interval between the peaks (the distance interval) is approximately coincident with the actual interval (30 cm) (see FIG. 7 (D)).

Therefore, in the radar apparatus 10 according to the present embodiment, it is possible to sensitively detect the peak frequencies of the frequency spectrum data acquired through the FFT process (coarse peak detection), and detect the peak frequencies of the frequency spectrum data acquired through the high resolution process after the IFFT process with high accuracy (fine peak detection). Thus, according to the present embodiment, it is possible to further improve the accuracy in detecting the distance to a target from its own vehicle.

Note that, in the second embodiment, as a result of the control circuit 16 executing Step 200 of the routine shown in FIG. 8, a "preprocess means" recited in the claims is implemented; as a result of the control circuit 16 executing Step 210, a "first FFT transform means" recited in the claims is implemented; as a result of the control circuit 16 executing Steps 220 and 230, a "postprocess means" recited in the claims is implemented; as a result of the control circuit 16 executing Step 240, a "peak frequency detection means" recited in the claims is implemented; as a result of the control circuit 16 executing Step 260, a "second FFT transform means" recited in the claims is implemented; as a result of the control circuit 16 executing Step 270, a "data extraction means" recited in the claims is implemented; as a result of the control circuit 16 executing Step 280, an "inverse FFT transform means" recited in the claims is implemented; and as a result of the control circuit 16 executing Steps 290 and 300, a "target detection means" recited in the claims is implemented.

Further, in the second embodiment, as a result of the control circuit 16 executing Step 290, a "high resolution data conversion means" recited in the claims is implemented; as a result of the control circuit 16 executing Step 300, a "high resolution peak frequency detection means" recited in the claims is implemented; and, as a result of detecting the distance to a target based on the peak frequencies acquired from executing Step 300, a "distance detection means" recited in the claims is implemented.

Further, in the second embodiment, after the preprocess of carrying out the window function operation on the sampling data, the FFT process is carried out, and then, the postprocess is carried out on the frequency spectrum data acquired through the FFT process. However, when the S/N ratio is relatively high, the postprocess can be omitted. That is, the postprocess can be carried out when the S/N ratio is relatively low, and can be omitted when the S/N ratio is relatively high.

In the first and second embodiments, as the high resolution process, the FDI method using the CAPON method is used. However, the present invention is not limited thereto, and, other than the CAPON method, it is also possible to use the FDI method using the MUSIC method, the ESPRIT method, or so.

Further, in the first and second embodiments, the time base data is converted into the frequency spectrum data through the high resolution process, and, based on the peak frequencies of this frequency spectrum data, the distance to the target is detected. However, the present invention is not limited thereto. It is also possible that, depending on the high resolution process, the time base data is not converted into the frequency spectrum data, and the distance to the target is directly detected. This high resolution process is, for example, the ESPRIT method, or so.

The present international application claims the priority based on the Japanese Patent Application No. 2013-000694 filed January 7, 2013 (Heisei-25) and the entire contents of the Japanese Patent Application No. 2013-000694 are incorporated in the present international application.

DESCRIPTION OF REFERENCE NUMERALS

| | |
|---|---|
| 10 | radar apparatus |
| 12 | antennas |
| 12a | transmission antenna |
| 12b | reception antenna |
| 14 | high frequency circuit |
| 16 | control circuit |

**Claims**

1. A radar apparatus having a transmission means that transmits a transmission signal and a reception means that receives reflected waves of the transmission signal as a received signal, the radar apparatus processing the received signal received by the reception means and detecting a target, the radar apparatus comprising:

   a FFT transform means that carries out a Fourier transform on the received signal received by the reception means into frequency spectrum data;
   a peak frequency detection means that detects a peak frequency of the frequency spectrum data acquired as an operation result of the FFT transform means;
   a data extraction means that extracts data near the peak frequency detected by the peak frequency detection means from the frequency spectrum data acquired as the operation result of the FFT transform means;
   an inverse FFT transform means that carries out an inverse Fourier transform on the data near the peak frequency acquired as an operation result of the data extraction means into time base data; and
   a target detection means that detects the target as a result of carrying out a high resolution process on the time base data acquired as an operation result of the inverse FFT transform means.

2. A radar apparatus having a transmission means that transmits a transmission signal and a reception means that receives reflected waves of the transmission signal as a received signal, the radar apparatus processing the received signal received by the reception means and detecting a target, the radar apparatus comprising:

a preprocess means that carries out a window function operation on the received signal received by the reception means;

a first FFT transform means that carries out a Fourier transform on data acquired as an operation result of the preprocess means into frequency spectrum data;

a peak frequency detection means that detects a peak frequency of the frequency spectrum data acquired as an operation result of the first FFT transform means;

a second FFT transform means that carries out a Fourier transform on the received signal received by the reception means into frequency spectrum data;

a data extraction means that extracts data near the peak frequency detected by the peak frequency detection means from the frequency spectrum data acquired as an operation result of the second FFT transform means;

an inverse FFT transform means that carries out an inverse Fourier transform on the data near the peak frequency acquired as an operation result of the data extraction means into time base data; and

a target detection means that detects the target as a result of carrying out a high resolution process on the time base data acquired as an operation result of the inverse FFT transform means.

3. The radar apparatus as claimed in claim 2, comprising:

a postprocess means that carries out a postprocess on the frequency spectrum data acquired as an operation result of the first FFT transform means, wherein

the peak frequency detection means detects, as the peak frequency, a peak frequency of the frequency spectrum data acquired as an operation result of the postprocess means.

4. The radar apparatus as claimed in claim 3, wherein
the postprocess is a modification process to be carried out for sharpening a peak on the frequency spectrum data acquired as the operation result of the first FFT transform means.

5. The radar apparatus as claimed in any one of claims 1-4, wherein
the high resolution process is a process using a frequency domain interferometry method on the time base data acquired as the operation result of the inverse FFT transform means.

6. The radar apparatus as claimed in any one of claims 1-5, wherein
the target detection means includes

a high resolution data conversion means that converts the time base data into frequency spectrum data through the high resolution process,

a high resolution peak frequency detection means that detects a peak frequency of the frequency spectrum data acquired as an operation result of the high resolution data conversion means, and

a distance detection means that detects a distance to the target based on a detection result of the high resolution peak frequency detection means.

7. The radar apparatus as claimed in any one of claims 1-6, wherein
the high resolution process is a process using a CAPON method, a MUSIC method or an ESPRIT method on the time base data acquired as the operation result of the inverse FFT transform means.

# FIG.1

10 RADER APPARATUS

12a

12b

| 14 |
| HIGH FREQUENCY CIRCUIT |

| 16 |
| CONTROL CIRCUIT |

→ (DATA OUTPUT)

# FIG.2

START

SAMPLING ～100

FFT PROCESS ～110

COARSE PEAK DETECTION ～120

PEAK EXTRACTION AND PARTIAL WAVEFORM GENERATION ～130

IFFT PROCESS ～140

HIGH RESOLUTION PROCESS ～150

FINE PEAK DETECTION ～160

END

# FIG.3

(A)
FFT RESULT

(B)
PARTIAL WAVEFORM
NEAR PEAK
FREQUENCIES

(C)
CAPON RESULT

# FIG.4

SYNTHESIZING—~16

~12b

# FIG.5

# FIG.6

```
         |
         |
         ▼
┌───────────────────────┐
│       SAMPLING        │
└───────────────────────┘
            │
            ▼
╔═══════════════════════╗
║    WINDOW FUNCTION     ║ ┐
║     INTEGRATION        ║ ├ PREPROCESS
╚═══════════════════════╝ ┘
            │
            ▼
┌───────────────────────┐
│      FFT PROCESS       │
└───────────────────────┘
            │
            ▼
╔═══════════════════════╗
║   BLANK SUBTRACTION    ║ ┐
╚═══════════════════════╝ │
            │             ├ POSTPROCESS
            ▼             │
╔═══════════════════════╗ │
║      INTEGRATION       ║ ┘
╚═══════════════════════╝
            │
            ▼
┌───────────────────────┐
│ COARSE PEAK DETECTION  │
└───────────────────────┘
            |
            |
```

# FIG.7

(A)

(B)

(C)

(D)

FIG.8

START

SAMPLING ~100

PREPROCESS { WINDOW FUNCTION OPERATION ~200

FFT FOR PEAK DETECTION ~210

POSTPROCESS { INTEGRATION ~220

BLANK SUBTRACTION ~230

COARSE PEAK DETECTION ~240

PEAK FREQUENCY

FFT FOR EXTRACTION SOURCE ~260

PEAK PART EXTRACTION AND PARTIAL WAVEFORM GENERATION ~270

IFFT ~280

HIGH RESOLUTION PROCESS ~290

FINE PEAK DETECTION ~300

END

EP 2 942 641 A1

## INTERNATIONAL SEARCH REPORT

| International application No. |
| --- |
| PCT/JP2013/054043 |

**A. CLASSIFICATION OF SUBJECT MATTER**
*G01S13/34*(2006.01)i

According to International Patent Classification (IPC) or to both national classification and IPC

**B. FIELDS SEARCHED**

Minimum documentation searched (classification system followed by classification symbols)
G01S7/00-7/64, G01S13/00-17/95

Documentation searched other than minimum documentation to the extent that such documents are included in the fields searched

| | | | |
| --- | --- | --- | --- |
| Jitsuyo Shinan Koho | 1922–1996 | Jitsuyo Shinan Toroku Koho | 1996–2013 |
| Kokai Jitsuyo Shinan Koho | 1971–2013 | Toroku Jitsuyo Shinan Koho | 1994–2013 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2010-54344 A (Denso Corp.), 11 March 2010 (11.03.2010), entire text; all drawings (Family: none) | 1-7 |
| A | JP 2008-249373 A (Mitsubishi Electric Corp.), 16 October 2008 (16.10.2008), entire text; all drawings (Family: none) | 1-7 |
| A | JP 2007-298503 A (Mitsubishi Electric Corp.), 15 November 2007 (15.11.2007), entire text; all drawings (Family: none) | 1-7 |

☒ Further documents are listed in the continuation of Box C.　　☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>13 March, 2013 (13.03.13) | Date of mailing of the international search report<br>26 March, 2013 (26.03.13) |
| --- | --- |
| Name and mailing address of the ISA/<br>Japanese Patent Office | Authorized officer |
| Facsimile No. | Telephone No. |

Form PCT/ISA/210 (second sheet) (July 2009)

<table>
<tr><td colspan="2" align="center"><strong>INTERNATIONAL SEARCH REPORT</strong></td><td>International application No.<br>PCT/JP2013/054043</td></tr>
</table>

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2007-232385 A  (Denso IT Laboratory, Inc.), 13 September 2007 (13.09.2007), entire text; all drawings & US 2008/0048906 A1     & DE 102007008587 A1 | 1-7 |
| A | JP 2000-171550 A (Koden Electronics Co., Ltd.), 23 June 2000 (23.06.2000), entire text; all drawings (Family: none) | 1-7 |
| A | JP 8-82674 A  (Thomson-CSF), 26 March 1996 (26.03.1996), entire text; all drawings & US 5504490 A            & EP 676649 A1 & FR 2718249 A1           & CA 2146188 A1 | 1-7 |

Form PCT/ISA/210 (continuation of second sheet) (July 2009)

**EP 2 942 641 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001091639 A
- JP 2013000694 A